# DEMANDE DE BREVET EUROPEEN

(11) **EP 4 814 858 A1**
(43) Date de publication de la demande: **30.09.2026**
(21) Numéro de dépôt: 26150228.0
(22) Date de dépôt: 05.01.2026
(51) Int. Cl.: G06T 5/10, G06T 5/70, G06V 40/00, G06V 10/46, G06V 40/12

(54) **PROCÉDÉ DE TRAITEMENT PAR ORDINATEUR D'UNE IMAGE MONTRANT UNE EMPREINTE DIGITALE**

(30) Priorité: 26.03.2025 FR 2503108
(71) Demandeur: Idemia Public Security France, 92400 Courbevoie (FR)
(72) Inventeur: MORICHON, Jean-Pierre, 92400 COURBEVOIE (FR)
(74) Mandataire: IPS

(57) **Abrégé**

Procédé de traitement par ordinateur d'une image d'entrée montrant une empreinte digitale, le procédé comprenant : causer l'affichage (106) d'une image spectrale constituant une transformée de Fourier de l'image d'entrée sur un écran d'affichage ; détecter (200) des actions d'utilisateur pendant que l'image spectrale est affichée ; modifier (202) l'image spectrale d'après les actions d'utilisateur en une image spectrale modifiée ; générer (204) une image de sortie constituant une transformée de Fourier inverse de l'image spectrale modifiée ; et causer (206) un affichage simultané de l'image spectrale modifiée et de l'image de sortie sur l'écran d'affichage.

## Description

### DOMAINE DE L'INVENTION

La présente invention concerne un procédé de traitement par ordinateur d'une image montrant une empreinte digitale, et un programme d'ordinateur pour la mise en œuvre de ce procédé.

### ETAT DE LA TECHNIQUE

Une image montrant une empreinte digitale est utilisée dans des applications diverses. Toutefois, une telle image peut comporter du bruit si bien que l'empreinte digitale n'est pas facilement exploitable dans ces applications.

On connaît de l'état de la technique un logiciel permettant de traiter une telle image afin de supprimer le bruit qu'elle contient, et ainsi mieux faire apparaître l'empreinte digitale. Le logiciel travaille dans le domaine fréquentiel, c'est-à-dire qu'il commande l'affichage d'une image spectrale représentant une transformée de Fourier bidimensionnelle de l'image montrant l'empreinte digitale. Le logiciel permet à un utilisateur d'appliquer des modifications prédéfinies à l'image spectrale. L'image spectrale modifiée résultant de ces modifications est ensuite retransformée en une image de sortie dans le domaine spatial, par application d'une transformée de Fourier inverse. Les différentes modifications applicables dans le domaine fréquentiel ont des effets différents dans l'image de sortie. Pour un bruit donné à supprimer, certaines modifications seront pertinentes, et d'autres pas. C'est à l'utilisateur d'identifier les modifications les plus pertinentes à appliquer dans l'image spectrale.

Toutefois, le logiciel ne permet pas à l'utilisateur de voir en temps réel les effets dans le domaine spatial des modifications qu'il réalise dans le domaine fréquentiel. Ceci rend le logiciel particulièrement fastidieux à utiliser, surtout lorsque l'utilisateur n'a pas de connaissances théoriques en traitement du signal qui lui permettraient d'interpréter facilement le sens des modifications qu'il applique dans l'image spectrale. En conséquence, l'utilisateur du logiciel met plus de temps à identifier les modifications les plus pertinentes pour supprimer un bruit donné.

### EXPOSE DE L'INVENTION

Un problème à résoudre est de permettre à un utilisateur n'ayant pas de connaissances théoriques en traitement du signal d'identifier plus rapidement des modifications pertinentes à réaliser sur une image dans le domaine fréquentiel.

Ce problème est résolu par un procédé de traitement par ordinateur d'une image d'entrée montrant une empreinte digitale, le procédé comprenant : causer l'affichage d'une image spectrale constituant une transformée de Fourier de l'image d'entrée sur un écran d'affichage ; détecter des actions d'utilisateur pendant que l'image spectrale est affichée ; modifier l'image spectrale d'après les actions d'utilisateur en une image spectrale modifiée ; générer une image de sortie constituant une transformée de Fourier inverse de l'image spectrale modifiée ; et causer un affichage simultané de l'image spectrale modifiée et de l'image de sortie sur l'écran d'affichage.

Au cours du procédé proposé, un utilisateur a la possibilité d'observer simultanément l'image spectrale modifiée et l'image de sortie dans laquelle les modifications appliquées dans le domaine fréquentiel sont répercutées. D'un simple regard, l'utilisateur peut décider si les modifications appliquées sont adaptées pour supprimer un bruit qu'il recherche, et ce sans avoir à réaliser d'action utilisateur supplémentaire. En conséquence, l'utilisateur peut tester différentes modifications plus rapidement, et devrait normalement converger plus rapidement vers une modification optimale qu'avec le logiciel cité en introduction.

Le procédé proposé constitue un premier objet, et peut comprendre en outre les caractéristiques optionnelles suivantes, prises seules ou en combinaison à chaque fois que cela est possible.

De préférence, lorsque les actions d'utilisateur comprennent la sélection d'une zone de l'image spectrale présentant une hauteur et une largeur respectivement inférieures à celles de l'image spectrale, modifier l'image spectrale comprend : identifier une valeur maximale de pixel dans la zone, et pour chaque pixel de la zone, mettre à zéro la valeur du pixel de l'image spectrale à condition que la valeur du pixel soit supérieure à la valeur maximale multipliée par un seuil.

De préférence le seuil est réglable par un utilisateur pendant que l'image spectrale est affichée.

De préférence, la sélection de la zone comprend une sélection successive de deux pixels différents de l'image spectrale, la zone est rectangulaire, et les deux pixels forment deux sommets opposés de la zone.

De préférence, lorsque les actions d'utilisateur comprennent la sélection de la zone, modifier l'image spectrale comprend par ailleurs : calculer un écart primaire entre un pixel primaire de la zone sélectionnée et un pixel central de l'image spectrale associé à une fréquence spatiale nulle, déterminer au moins un pixel secondaire de l'image spectrale qui est aligné avec le pixel central et le pixel primaire, et qui est distant du pixel central d'un écart secondaire égal à un multiple de l'écart primaire, et pour chaque pixel secondaire : déterminer une zone secondaire de même hauteur et de même largeur que la zone sélectionnée, identifier une valeur maximale de pixel dans la zone secondaire, et pour chaque pixel de la zone secondaire, mettre à zéro la valeur du pixel de l'image spectrale à condition que la valeur du pixel soit supérieure à la valeur maximale multipliée par le seuil.

De préférence, lorsque les actions d'utilisateur comprennent la sélection dans l'image spectrale d'une bande définie par une direction et par une épaisseur mesurée transversalement à la direction, modifier l'image spectrale comprend mettre à zéro la valeur de chaque pixel de l'image spectrale se trouvant dans la bande.

De préférence, au moins une parmi la direction et l'épaisseur est réglable par un utilisateur pendant que l'image spectrale est affichée.

De préférence, la sélection de la bande comprend une sélection successive de deux pixels différents de l'image spectrale, la direction étant indiquée par une ligne passant par les deux pixels.

De préférence, lorsque les actions d'utilisateur comprennent la sélection dans l'image spectrale d'un secteur angulaire s'étendant depuis un pixel central de l'image spectrale associé à une fréquence spatiale nulle, modifier l'image spectrale comprend mettre à zéro la valeur de chaque pixel de l'image spectrale se trouvant dans le secteur angulaire.

De préférence, lorsque les actions d'utilisateur comprennent la sélection dans l'image spectrale d'un anneau s'étendant autour d'un pixel central de l'image spectrale associé à une fréquence spatiale nulle, l'anneau étant défini par un rayon interne associé à une première fréquence spatiale et par un rayon externe associé à une deuxième fréquence spatiale supérieure à la première fréquence spatiale, modifier l'image spectrale comprend mettre à zéro la valeur de chaque pixel de l'image se trouvant hors de l'anneau, à l'exception du pixel central.

De préférence, au moins une parmi la première fréquence spatiale et la deuxième fréquence spatiale est réglable par un utilisateur pendant que l'image spectrale est affichée.

De préférence, la modification de l'image spectrale est appliquée à l'image spectrale initiale, ce qui permet d'utiliser l'image spectrale initiale comme référence pour générer un masque, et de combiner différents masques élémentaires, facilitant également les annulations individuelles de modifications.

Un deuxième objet proposé est constitué par un produit programme d'ordinateur comprenant des instructions de code de programme pour l'exécution des étapes du procédé constituant le premier objet, lorsque ce programme est exécuté par un ordinateur.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 illustre de façon schématique un ordinateur constituant un dispositif de traitement d'image selon un mode de réalisation.
La figure 2 représente une interface graphique affichée sur un écran d'affichage, selon un mode de réalisation.
La figure 3 est un organigramme d'étapes d'un procédé de traitement d'image selon un mode de réalisation.
La figure 4 représente une image spectrale avant application d'une modification d'un premier type selon un mode de réalisation sans réplication, et la figure 5 représente une image spectrale résultant de la modification du premier type selon ce mode de réalisation sans réplication.
La figure 6 représente une image spectrale avant application d'une modification d'un premier type selon un mode de réalisation avec réplication, et la figure 7 représente une image spectrale résultant de la modification du premier type selon ce mode de réalisation avec réplication.
La figure 8 représente une image spectrale avant application d'une modification d'un deuxième type, et la figure 9 représente une image spectrale résultant de la modification du deuxième type.
La figure 10 représente une image spectrale avant application d'une modification d'un troisième type, et la figure 11 représente une image spectrale résultant de la modification du troisième type.
La figure 12 représente une image spectrale avant application d'une modification d'un quatrième type, et la figure 13 représente une image spectrale résultant de la modification du quatrième type.
La figure 14, la figure 15 et la figure 16 comprennent chacune une image spectrale modifiée et une image de sortie correspondante, montrant une empreinte digitale.

Sur l'ensemble des figures, les éléments similaires portent des références identiques.

### DESCRIPTION DETAILLEE DE L'INVENTION

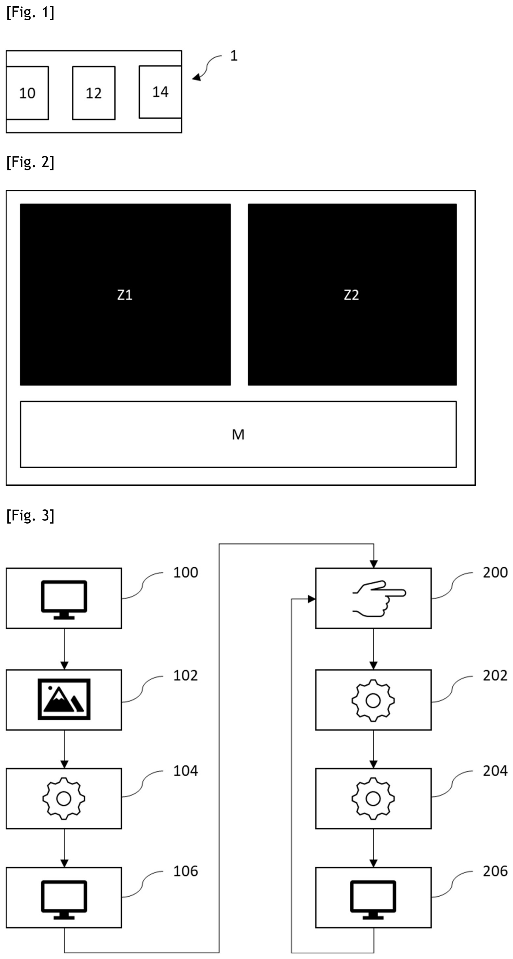

En référence à la **figure 1****,** un ordinateur comprend une interface d'entrée 10, un module de traitement d'image 12 et un écran d'affichage 14.

L'interface d'entrée comprend au moins un périphérique d'entrée 10 propre à recevoir des actions d'utilisateur, c'est-à-dire des actions réalisées par un utilisateur. L'interface d'entrée 10 peut à cet effet comprendre au moins un des périphériques d'entrée suivants : un clavier, une souris, un écran tactile superposé avec l'écran d'affichage 14.

Le module de traitement d'image 12 comprend une mémoire et au moins un processeur. Le ou chaque processeur est quelconque. Il peut s'agit d'un processeur générique, tel qu'un CPU, ou bien d'un processeur spécialisé dans le traitement d'image (un DSP par exemple).

La mémoire stocke un programme de traitement d'image comprenant des instructions de code pour l'exécution d'un procédé de traitement dont les étapes seront décrites plus loin, lorsque le programme est exécuté par le ou chaque processeur.

En particulier, le programme comprend des instructions de code pour l'affichage d'une interface graphique sur l'écran d'affichage 14.

En référence à la figure 2, l'interface graphique comprend trois zones dans un mode de réalisation : une première zone Z1 susceptible de contenir une image dans le domaine spatial, une deuxième zone Z2 susceptible de contenir une image spectrale Z2, et un menu M comprenant un certain nombre d'éléments permettant de modifier certains paramètres du programme.

Le programme de traitement est par ailleurs capable de détecter des actions d'utilisateurs reçues par l'interface d'entrée 10.

En référence à la figure 3, un procédé mis en œuvre par le programme, lorsque le programme est exécuté par le ou chaque processeur, comprend les étapes suivantes.

Dans une étape 100, par exemple réalisée automatiquement lors d'un lancement du programme depuis un système d'exploitation de l'ordinateur, le programme commande l'affichage du menu M sur l'écran d'affichage 14. A ce stade, aucune image n'est affichée dans la première zone Z1 et dans la deuxième zone Z2.

Dans une étape 102, le programme détecte la sélection, par un utilisateur, d'une image d'entrée montrant une empreinte digitale. Pour procéder à une telle sélection, l'utilisateur peut cliquer sur un bouton approprié se trouvant dans le menu M, qui déclenche l'ouverture d'un explorateur dans lequel l'utilisateur peut naviguer pour aller sélectionner un fichier correspondant à l'image d'entrée.

Dans une étape 104, le programme applique une transformation de Fourier à l'image d'entrée, de sorte à produire une image spectrale initiale qui représente un spectre 2D de l'image d'entrée. Cette transformation est connue de l'état de la technique.

Dans une étape 106, le programme commande un affichage simultané de l'image d'entrée et de l'image spectrale initiale sur l'écran d'affichage 14. Plus précisément, l'image d'entrée est affichée dans la première zone Z1, et l'image spectrale initiale est affichée dans la deuxième zone Z2. L'ordre dans lequel l'image d'entrée et l'image spectrale initiale commencent à être affichées est quelconque, pourvu que les deux images finissent par être visibles simultanément sur l'écran d'affichage. En particulier, il peut être prévu d'afficher l'image d'entrée avant l'étape 104.

Chaque pixel de l'image spectrale a une valeur correspondant à un niveau de gris. Cette valeur représente une amplitude du spectre sous-jacent. Lorsque le pixel est de valeur nulle, le pixel est de couleur noire (amplitude nulle) ; lorsque le pixel est de valeur maximale, le pixel est de couleur blanche.

Le programme se met alors en attente d'actions d'utilisateurs via le menu M affiché.

Dans une étape 200, le programme détecte des actions d'utilisateur pendant que l'image spectrale initiale est affichée. On verra dans la suite que les actions d'utilisateurs peuvent être réalisées dans la deuxième zone Z2 (c'est-à-dire sur l'image spectrale qui y est affichée) et/ou dans le menu M. On verra dans la suite que le programme est capable de détecter différents types d'actions d'utilisateur.

Dans une étape 202, le programme modifie l'image spectrale d'après les actions d'utilisateur en une image spectrale modifiée. Autrement dit, la modification appliquée à l'image spectrale à l'étape 202 dépend des actions d'utilisateur détectées par le programme à l'étape 200.

De préférence, le programme sauvegarde une copie de l'image spectrale en mémoire avant de réaliser cette modification, et sauvegarde des données indicatives de la modification effectuée à l'étape 202. Cette sauvegarde offre la possibilité à un utilisateur de demander au programme de tester différentes modifications sans risque.

Dans une étape 204 le programme applique une transformation de Fourier inverse à l'image spectrale modifiée, de sorte à produire une image de sortie dans le domaine spatial, modifiée par rapport à l'image d'entrée. La transformée appliquée au cours de cette étape est connue de l'état de la technique ; elle constitue la réciproque de la transformation de Fourier appliquée à l'étape 104.

Dans une étape 206, le programme commande un affichage simultané de l'image de sortie et de l'image spectrale modifiée sur l'écran d'affichage 14. Plus précisément, l'image de sortie est affichée dans la première zone Z1, et l'image spectrale modifiée est affichée dans la deuxième zone Z2. L'ordre dans lequel l'image de sortie et l'image spectrale modifiée commencent à être affichées est quelconque, pourvu que les deux images finissent par être visibles simultanément sur l'écran d'affichage 14. En particulier, il peut être prévu d'afficher l'image spectrale modifiée avant l'étape 204.

Les étapes 200 à 206 peuvent être répétées dans le temps, pour différentes actions d'utilisateurs détectées. A chaque fois, on aboutit à l'affichage concomitant d'une nouvelle image spectrale modifié dans la deuxième zone Z2 et de sa résultante dans le domaine spatial dans la première zone Z1. Ces deux affichages concomitants permettent à un utilisateur n'ayant pas de connaissances théoriques approfondies en traitement du signal de pouvoir constater visuellement dans le domaine spatial les effets d'une modification réalisée dans le domaine fréquentiel, et ce de manière très immédiate. L'utilisateur peut ainsi tester différentes modifications de spectre rapidement, et converger rapidement vers une image de sortie qui répond à ses besoins, sans pour autant maîtriser la théorie de Fourier.

En particulier, le programme offre la possibilité à l'utilisateur de revenir sur des modifications effectuées antérieurement par le programme, sans avoir à y revenir dans l'ordre temporel d'application.

On va maintenant décrire différentes modifications applicables à une image spectrale affichée dans la deuxième zone Z2 par le programme, pour différentes actions d'utilisateur détectées à l'étape 200.

### Traitement dans une zone de dimensions limitées réplicable

Des premières actions d'utilisateur comprennent la sélection d'une zone A1 de l'image spectrale de dimensions limitées. Ainsi, cette zone A1 présente une hauteur et une largeur respectivement inférieures à celles de l'image spectrale. De préférence, la zone A1 a une hauteur inférieure à la moitié de la hauteur de l'image spectrale et une largeur inférieure à la largeur d'image spectrale.

La zone A1 est par exemple rectangulaire. Pour sélectionner cette zone A1, l'utilisateur peut pointer successivement sur deux pixels différents de l'image spectrale telle qu'affichée dans la deuxième zone Z2 (par exemple par un clic de souris ou avec le doigt en cas de présence d'écran tactile). La zone A1 rectangulaire détectée sera alors un rectangle dont deux sommets opposés se trouve en les deux pixels sélectionnés. En variante, la largeur et la hauteur de la zone A1 sont prédéfinies, et l'utilisateur pointe sur un seul pixel : la zone rectangulaire A1 détectée sera alors un rectangle contenant le pixel pointé (ce pixel pointé est par exemple le centre du rectangle ou l'un de ses sommets).

Il peut être prévu dans le menu M affiché un premier bouton permettant la sélection de ces deux points. Ainsi, c'est seulement après un appui sur ce premier bouton que le programme se met en attente de la sélection de la zone A1 de dimensions limitées dans l'image spectrale.

La zone A1 sélectionnée comprend des pixels contigus de l'image spectrale.

Lorsqu'une telle zone A1 est sélectionnée à l'étape 200, alors la modification réalisée à l'étape 202 est une modification d'un premier type comprenant les sous-étapes suivantes.

Le programme identifie une valeur maximale de pixel dans la zone A1 sélectionnée.

Ensuite, le programme calcule la valeur maximale multipliée par un seuil. Le résultat de ce calcul est une valeur de référence.

Le seuil a une valeur comprise dans un intervalle allant de 0 à 1. Le seuil peut être présenté à l'utilisateur comme un pourcentage de la valeur maximale précitée.

Pour chaque pixel faisant partie de la zone A1 sélectionnée, le programme met à zéro la valeur de ce pixel à condition que la valeur du pixel soit supérieure à la valeur de référence. Ainsi, si la valeur du pixel considéré n'est pas supérieure à la valeur de référence, le pixel n'est pas modifié. De préférence, un filtrage sur le masque peut être appliqué pour éviter/limiter des effets d'écho dans l'image de sortie.

Dans un mode de réalisation sans réplication, tout pixel situé hors de la zone A1 sélectionné n'est pas modifié. L'image spectrale modifiée résultant de l'étape 202 est alors obtenue.

L'affichage de l'image spectrale modifiée à l'étape 206 en lieu et place de l'image spectrale sera perçu par l'utilisateur comme un « noircissement » d'un sous-ensemble de pixels de la zone A1 de dimensions limitées qu'il a sélectionnée (ceux dont les valeurs respectives dépassent la valeur de référence.

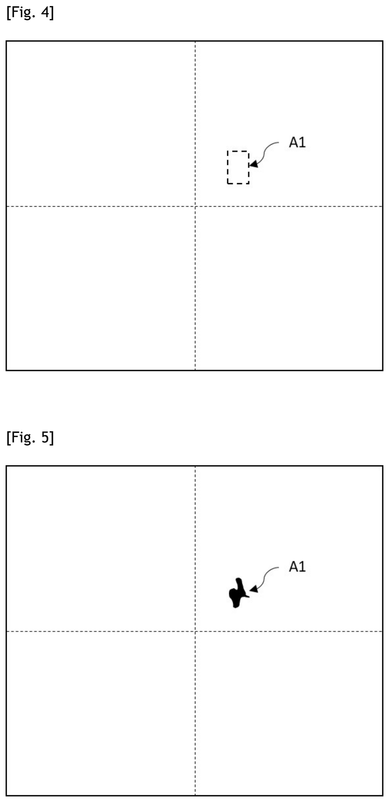

On a représenté sur la figure 4 une zone A1 de dimensions limitées sélectionnée par un utilisateur, et sur la figure 5 le résultat de la première modification, appliquée dans la zone A1. La partie en noir de la figure 5 désigne l'ensemble des pixels qui ont été mis à zéro par la modification du premier type.

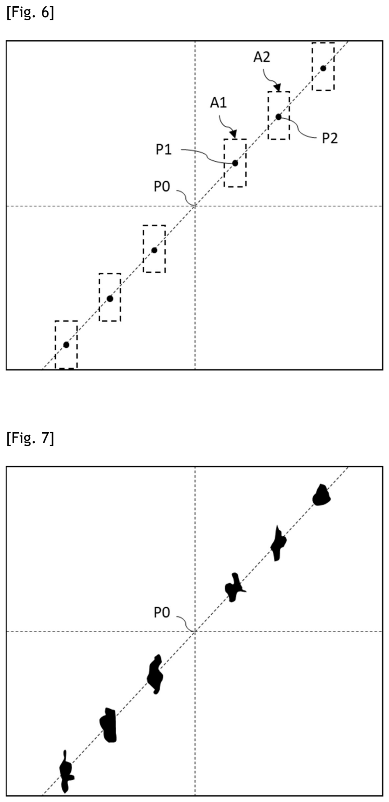

Dans un mode de réalisation avec réplication, la modification du premier type (résultant des premières actions d'utilisateurs exposées ci-dessus) comprend en outre les sous-étapes complémentaires suivantes en référence aux figures 6 et 7.

Le programme détermine les coordonnées d'un pixel primaire P0 se trouvant dans la zone A1 sélectionnée. Le pixel primaire P1 est par exemple un pixel situé au centre de la zone A1 sélectionnée.

Le programme calcule un écart primaire entre le pixel primaire P1 et un pixel central P0 de l'image spectrale associé à une fréquence spatiale nulle (on peut également considérer que cet écart primaire est une distance radiale, puisqu'elle s'étend entre P0, centre de l'image spectrale, et P1). Autrement dit, on trouve en ce point central P0 une composante continue.

Le programme détermine les coordonnées d'au moins un pixel secondaire P2 de l'image spectrale qui satisfait les conditions suivantes de manière cumulative :
- le pixel central P0, le pixel primaire P1 et le pixel secondaire P2 sont alignés (ce qui implique que le pixel secondaire P2 est distinct du pixel central P0 et distinct du pixel primaire P1);
- le pixel secondaire P2 est distant du pixel central P0 d'un écart secondaire égal à un multiple entier de l'écart primaire.

Si le pixel primaire P1 a des coordonnées polaires comprenant un angle et une distance, alors le programme peut simplement déduire les coordonnées polaires du pixel secondaire P2 en procédant comme suit : multiplier la coordonnée de distance du pixel primaire **P1** par un entier positif, et conserver la coordonnée d'angle du pixel primaire ou bien lui ajouter 180 degrés.

Si le pixel primaire a des coordonnées cartésiennes (x, y) et si P1 est au centre de la zone A1, alors le pixel secondaire a des coordonnées cartésiennes de la forme (kx, ky), où k est un entier relatif signé différent de 1 et de 0 (pour exclure P1 et P0).

On comprend que le nombre de pixels secondaires de l'image spectrale satisfaisant les conditions précédentes dépend de l'emplacement de la zone sélectionnée par l'utilisateur dans l'image spectrale affichée. Plus cette zone est proche du centre de l'image, plus ce nombre est important. Dans l'exemple d'image spectrale représenté sur la figure 6, il existe le pixel secondaire P2 et quatre autres pixels secondaires.

De préférence, le programme détermine les coordonnées de tous les pixels secondaires qui satisfont les conditions susmentionnées.

Ensuite, pour chaque pixel secondaire, le programme détermine une zone secondaire associée qui inclut le pixel secondaire, la zone secondaire étant de mêmes dimensions que la zone primaire. La zone secondaire a ainsi la même largeur et la même hauteur que la zone primaire. Elle est en outre de même forme. Ainsi, lorsque la zone primaire est rectangulaire, la zone secondaire est également rectangulaire.

La relation entre le pixel primaire P1 et la zone primaire est la même que la relation entre un pixel secondaire P2 et la zone secondaire qui lui est associée. Par exemple, si le pixel primaire P1 est au centre de la zone primaire, alors le pixel secondaire P2 est au centre de la zone secondaire associée.

Ensuite, les modifications faites dans la zone primaire sont répétées dans chaque zone secondaire. Autrement dit, pour chaque zone secondaire, le programme identifie une valeur maximale de pixel dans la zone secondaire, puis, pour chaque pixel de la zone secondaire, met à zéro la valeur du pixel de l'image spectrale à condition que la valeur du pixel soit supérieure à la valeur maximale multipliée par le seuil discuté précédemment.

Dans le mode de réalisation avec réplication, l'affichage de l'image spectrale modifiée à l'étape 206 en lieu et place de l'image spectrale sera perçu par l'utilisateur comme un « noircissement » non seulement d'un sous sous-ensemble de pixels de la zone primaire qu'il a sélectionnée (ceux dont les valeurs respectives dépassent la valeur de référence), mais également d'autres pixels dans des zones secondaires alignées avec la zone primaire. L'utilisateur n'a pas eu besoin de sélectionner à la main ces zones secondaires pour les noircir. La figure 7 constitue un exemple de résultat de cette modification appliquée à l'image d'exemple de la figure 6.

Certains motifs périodiques apparaissent dans une image spectrale sous la forme de lobes alignés. Ce mode de réalisation avec réplication a pour avantage de permettre à l'utilisateur de supprimer très facilement, c'est-à-dire moyennant un nombre d'actions très restreint, de tels motifs périodiques. Pour cela, il suffit à l'utilisateur de sélectionner une zone englobant le lobe primaire du motif (c'est-à-dire celui qui est le plus proche du centre de l'image spectrale), et le programme s'occupera de trouver des lobes secondaires du motif.

Il est à noter que le seuil utilisé pour mettre à zéro certains pixels de la zone sélectionnée (primaire) et le cas échéant certains pixels de zone secondaire est un paramètre réglable par l'utilisateur pendant que l'image spectrale initiale est affichée. Par exemple, il peut être prévu dans le menu M un curseur déplaçable par l'utilisateur en vue de faire varier la valeur du seuil entre 0 et 1. La valeur peut être présentée à l'utilisateur comme un pourcentage entre 0 et 100%.

Lorsque le programme détecte une variation du seuil (il s'agit d'une action utilisateur), le programme applique la modification du premier type sur l'image spectrale initiale, sur la base la nouvelle valeur du seuil.

### Traitement en bande

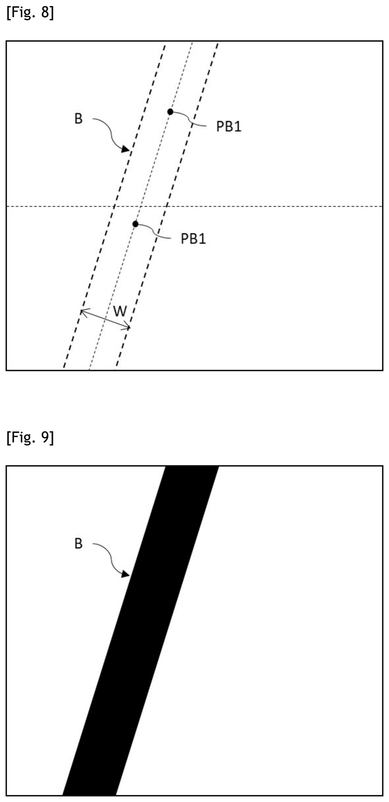

En référence aux figures 8 et 9, des deuxièmes actions d'utilisateur comprennent la sélection dans l'image spectrale d'une bande B définie par une direction et par une épaisseur W mesurée transversalement à la direction.

Contrairement à la zone de dimensions limitées discutée précédemment, la bande B présente une longueur indéfinie dans la direction. En fait, la bande est délimitée par deux lignes parallèles à la direction, les deux lignes étant distantes l'une de l'autre par l'épaisseur W.

Pour sélectionner la bande B, l'utilisateur peut successivement sélectionner deux pixels différents PB1, PB2 de l'image spectrale, la direction étant indiquée par une ligne passant par les deux pixels PB1, PB2. La ligne est par exemple une ligne centrale de la bande B, c'est-à-dire que cette ligne est à mi-distance des deux lignes qui délimitent la bande B.

Il peut être prévu dans le menu M affiché un deuxième bouton permettant une sélection de bande. Ainsi, c'est seulement après un appui sur ce deuxième bouton que le programme se met en attente de la sélection d'une bande dans l'image spectrale.

Lorsqu'une bande B est sélectionnée à l'étape 200, alors la modification réalisée à l'étape 202 est une modification d'un deuxième type consistant à mettre à zéro les valeurs de tous les pixels situés dans la bande B, en utilisant une épaisseur W prédéfinie.

Ce traitement trouve avantageusement application lorsque l'image d'entrée montre des défauts dont la transformée de Fourier se traduit par des lignes dans l'espace de Fourier.

De préférence, si la bande B inclut le pixel central P0, alors le pixel central P0 est exclu de la bande avant modification. Autrement dit, la valeur du pixel central P0 n'est, par exception, pas mise à zéro. Il est d'intérêt de conserver la composante de fréquence nulle (autrement dit la composante continue de l'image d'entrée) car celle-ci concentre une grande quantité d'énergie. Si la composante de fréquence nulle était supprimée, l'image de sortie serait rendue plus sombre que l'image d'entrée, ce qui n'est pas désirable.

Par exemple, l'épaisseur de la bande B peut être réglée au moyen de curseur dans le menu M.

Les pixels de l'image spectrale situés hors de la bande B ne sont pas modifiés.

L'épaisseur W et la direction de la bande B sont des paramètres réglables par l'utilisateur pendant qu'une image spectrale est affichée.

Lorsque le programme détecte une variation de l'épaisseur W et/ou de la direction de la B (il s'agit d'actions d'utilisateur), applique la modification du deuxièùe type sur l'image spectrale initiale, sur la base des nouvelles valeurs de ces deux paramètres.

### Traitement en secteur angulaire

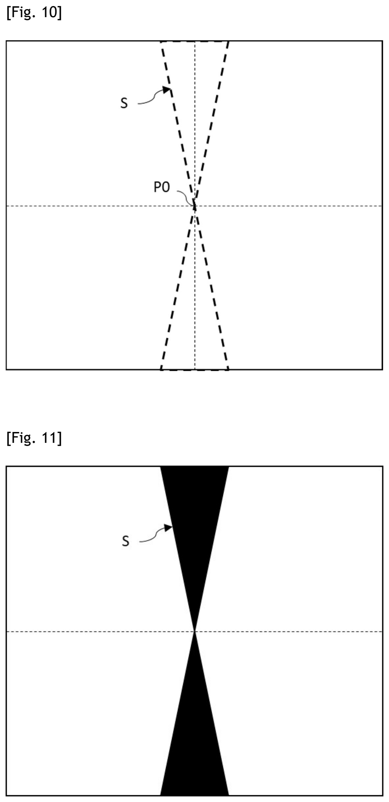

En référence aux figures 10 et 11, des troisièmes actions d'utilisateur comprennent la sélection dans l'image spectrale d'un secteur angulaire S s'étendant depuis le pixel central P0 de l'image spectrale (associé à une fréquence spatiale nulle).

Un tel secteur angulaire est défini par une direction principale du secteur et un écartement angulaire du secteur de part et d'autre de la direction principale.

Pour sélectionner la direction principale, un utilisateur peut pointer sur un point de l'image ; la direction principale détectée sera alors une droite passant par le pixel central P0 et le pixel pointé.

Le secteur angulaire est symétrique par rapport au pixel central P0.

De préférence, les masques utilisés peuvent être définis dans une seule moitié de l'image spectrale, puis être symétrisés par rapport au pixel central P0. Ainsi, on s'assure que la symétrie, (liée à la parité de la transformée de Fourier d'un signal réel) est respectée.

Lorsqu'un secteur angulaire S est sélectionné à l'étape 200, alors la modification réalisée à l'étape 202 est une modification d'un troisième type consistant à mettre à zéro les valeurs de tous les pixels situés dans le secteur angulaire S.

De préférence, le pixel central P0 ne fait pas partie du secteur angulaire S. La valeur du pixel central P0 n'est alors pas mise à zéro pour les raisons déjà évoquées plus haut.

Les pixels de l'image spectrale situés hors du secteur angulaire ne sont pas modifiés.

La direction et l'écartement angulaire du secteur angulaire sont des paramètres réglables par l'utilisateur. L'utilisateur peut faire « tourner » le secteur angulaire autour du pixel P0 en faisant varier la direction principale, et/ou peut rendre le secteur angulaire plus ou moins large en faisant varier l'écartement angulaire. Par exemple, deux éléments mobiles peuvent être affichés dans le menu M pour permettre à l'utilisateur de régler ces deux paramètres indépendamment l'une de l'autre. Ces éléments mobiles peuvent être des curseurs mobiles en translation ou des molettes mobile en rotation par l'utilisateur par des actions utilisateurs appropriées. Dans un autre mode de réalisation, le menu ne comprend qu'un élément mobile pour faire varier l'écartement angulaire, et l'utilisateur peut simplement modifier la direction principale en déplaçant le pixel qu'il a pointé, par une action de type « glisser-déposer ».

Ce traitement est avantageux lorsqu'un utilisateur poursuit l'un des buts suivants : supprimer des défauts directionnels, ou se concentrer sur certaines directions de lignes pour mieux discerner les points remarquables d'une empreinte.

Une modification d'au moins un parmi les angles consiste en une action utilisateur qui déclenche une nouvelle mise en œuvre de la modification d'un troisième type de l'image spectrale initiale sur la base des valeurs des angles réglées par l'utilisateur.

### Filtre passe-bande

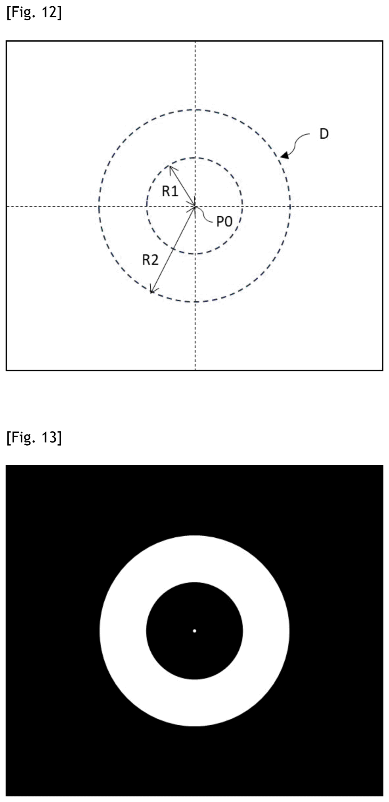

En référence aux figures 12 et 13, des quatrièmes actions d'utilisateur comprennent la sélection dans l'image spectrale d'un anneau D s'étendant autour du pixel central de l'image spectrale (associé à une fréquence spatiale nulle).

L'anneau D est défini par un rayon interne R1 associé à une première fréquence spatiale minimale et par un rayon externe R2 associé à une deuxième fréquence spatiale. L'anneau est délimité par deux cercles concentriques : un cercle externe ayant le rayon externe, et un cercle interne ayant le rayon interne.

Lorsqu'un anneau est sélectionné à l'étape 200, alors la modification réalisée à l'étape 202 est une modification d'un quatrième type consistant à mettre à zéro les valeurs de tous les pixels de l'image spectrale qui sont situés hors de l'anneau D, à l'exception du pixel central P0, comme cela est représenté dans l'exemple de la figure 13.

La modification du quatrième type revient à conserver les composantes de l'image spectrale ayant les fréquences spatiales suivantes : les fréquences spatiales qui sont comprises entre la première fréquence spatiale et la deuxième fréquence spatiale, ainsi que la fréquence nulle. Il est d'intérêt de conserver la composante de fréquence nulle (autrement dit la composante continue de l'image d'entrée) car celle-ci concentre une grande quantité d'énergie. Si la composante de fréquence nulle était supprimée, l'image de sortie serait rendue plus sombre que l'image d'entrée, ce qui n'est pas désirable.

Au moins un parmi le rayon interne R1 et le rayon externe R2 est un paramètre réglable par un utilisateur pendant que l'image spectrale est affichée. Par exemple, ces rayons peuvent être réglés au moyen de curseurs dans le menu M.

Ce traitement trouve avantageusement application pour éliminer toutes les contributions fréquentielles en dehors d'une plage de fréquences d'une empreinte montrée dans l'image d'entrée. Les valeurs par défaut de R1 et R2 sont préalablement choisies dans ce but, en fonction d'une résolution de l'image d'entrée. Les valeurs de R1 et R2 sont choisies pour ne pas endommager une empreinte quelle que soit la fréquence de ces lignes.

Une modification d'au moins un parmi les rayons susmentionnés consiste en une action utilisateur qui déclenche une nouvelle mise en œuvre de la modification du quatrième type de l'image spectrale initiale sur la base des valeurs de rayons réglées par l'utilisateur.

### Autres aspects / fonctionnalités

Le programme peut comprendre des étapes optionnelles entre l'étape 106 et l'étape 200. Ces étapes sont les suivantes.

Le programme applique automatiquement à l'image spectrale initiale une modification par défaut, de sorte à produire une image spectrale modifiée par défaut, applique une transformation de Fourier inverse à l'image spectrale modifiée par défaut, et cause l'affichage simultané de l'image spectrale modifiée par défaut et de l'image de sortie par défaut. Ces étapes sont similaires aux étapes 202, 204 et 206, mais ne sont pas déclenchées par des actions d'utilisateur, mais automatiquement après sélection de l'image d'entrée à l'étape 102.

La modification par défaut peut être l'une des modifications exposées précédemment.

Par exemple, la modification par défaut est du quatrième type (en anneau). Le programme peut présélectionner un anneau R par défaut comme suit :
- déterminer une distance crête-à-crête entre deux crêtes voisines d'une empreinte digitale montrée dans l'image d'entrée,
- obtenir une résolution de l'image d'entrée,
- estimer une fréquence spatiale de l'empreinte digitale à partir de la distance crête-à-crête et de la résolution de l'image d'entrée,
- ajuster le rayon interne R1 de sorte que la première fréquence spatiale qui lui est associée est strictement inférieure à la fréquence spatiale de l'empreinte digitale,
- ajuster le rayon externe R2 de sorte que la deuxième fréquence spatiale qui lui est associée est strictement supérieure à la fréquence spatiale de l'empreinte digitale.

Ceci permet ainsi à d'économiser des actions d'utilisateur, tout en évitant que l'empreinte digitale ne soit complètement ou partiellement effacée dans l'image de sortie correspondante.

### Exemples d'images obtenues

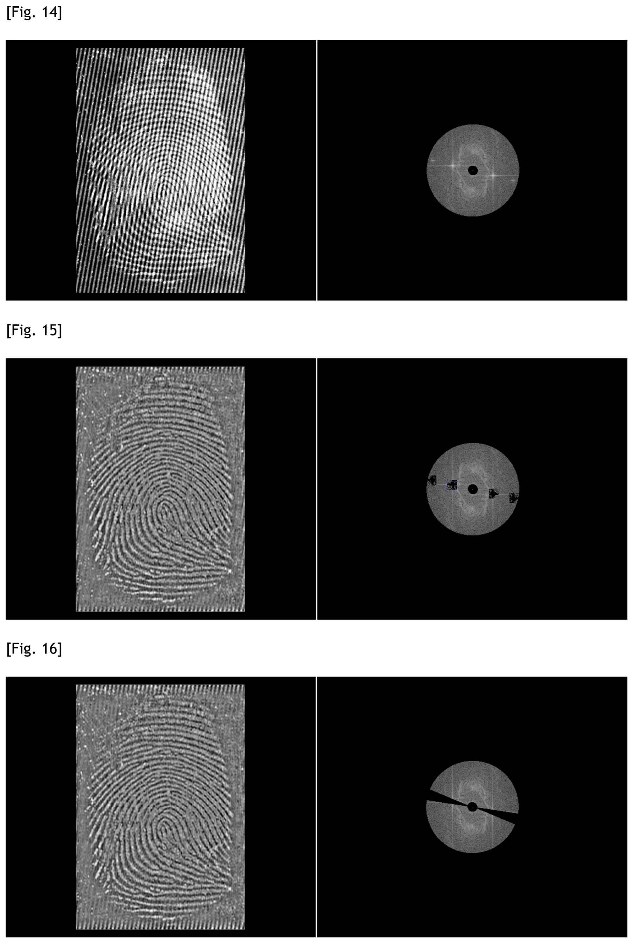

On a représenté sur la figure 14, la figure 15 et la figure 16 les résultats de différents traitements appliqués à des images d'entrée montrant chacune une empreinte digitale.

La figure 14 montre (à gauche) une image de sortie résultant d'une application du filtre passe bande à une image d'entrée. Cette image de sortie montre une empreinte digitale, mais présente des lignes parallèles obliques constituant un motif périodique gênant l'observation de l'empreinte digitale. Ce motif périodique est causé par les quatre lobes visibles dans l'image spectrale (à droite) sous la forme de quatre point clairs alignés avec le pixel central de cette image spectrale. C'est typiquement dans une telle situation que le traitement en zone réplicable décrit précédemment trouve avantageusement application.

La figure 15 montre justement une image de sortie résultant de l'application cumulée d'un filtre passe bande et du traitement en zone réplicable. Un utilisateur a sélectionné l'un des lobes primaires, conduisant ainsi à la suppression de valeurs dans les zones correspondant aux quatre lobes précités. Ceci permet a permis d'éliminer dans l'image de sortie le motif périodique qui était visible à gauche de la figure 14.

La figure 16 montre une image de sortie résultant de l'application cumulée d'un filtre passe bande et du traitement en secteur angulaire. Cette solution alternative a aussi permis d'éliminer dans l'image de sortie le motif périodique qui était visible sur la figure 14.

## Revendications

1. Procédé de traitement par ordinateur d'une image d'entrée montrant une empreinte digitale, le procédé comprenant :
• causer l'affichage (106) d'une image spectrale constituant une transformée de Fourier de l'image d'entrée sur un écran d'affichage,
• détecter (200) des actions d'utilisateur pendant que l'image spectrale est affichée,
• modifier (202) l'image spectrale d'après les actions d'utilisateur en une image spectrale modifiée,
• générer (204) une image de sortie constituant une transformée de Fourier inverse de l'image spectrale modifiée,
• causer (206) un affichage simultané de l'image spectrale modifiée et de l'image de sortie sur l'écran d'affichage.

2. Procédé selon la revendication précédente, dans lequel, lorsque les actions d'utilisateur comprennent la sélection d'une zone (A1) de l'image spectrale présentant une hauteur et une largeur respectivement inférieures à celles de l'image spectrale, modifier l'image spectrale comprend :
• identifier une valeur maximale de pixel dans la zone,
• pour chaque pixel de la zone, mettre à zéro la valeur du pixel de l'image spectrale à condition que la valeur du pixel soit supérieure à la valeur maximale multipliée par un seuil.

3. Procédé selon la revendication 2, dans lequel la sélection de la zone (A1) comprend une sélection successive de deux pixels différents de l'image spectrale, la zone (A1) est rectangulaire, et les deux pixels forment deux sommets opposés de la zone (A1).

4. Procédé selon l'une quelconque des revendications 2 et 3, dans lequel, lorsque les actions d'utilisateur comprennent la sélection de la zone (A1), modifier l'image spectrale comprend par ailleurs :
• calculer un écart primaire entre un pixel primaire (P1) de la zone sélectionnée et un pixel central (P0) de l'image spectrale associé à une fréquence spatiale nulle,
• déterminer au moins un pixel secondaire (P2) de l'image spectrale qui est aligné avec le pixel central et le pixel primaire, et qui est distant du pixel central d'un écart secondaire égal à un multiple de l'écart primaire,
• pour chaque pixel secondaire (P2) :
• déterminer une zone secondaire (A2) de même hauteur et de même largeur que la zone sélectionnée (A1),
• identifier une valeur maximale de pixel dans la zone secondaire,
• pour chaque pixel de la zone secondaire (A2), mettre à zéro la valeur du pixel de l'image spectrale à condition que la valeur du pixel soit supérieure à la valeur maximale multipliée par le seuil.

5. Procédé selon l'une quelconque des revendications précédentes, dans lequel lorsque les actions d'utilisateur comprennent la sélection dans l'image spectrale d'une bande (B) définie par une direction et par une épaisseur (W) mesurée transversalement à la direction, modifier l'image spectrale comprend mettre à zéro la valeur de chaque pixel de l'image spectrale se trouvant dans la bande (B).

6. Procédé selon la revendication précédente, dans lequel au moins une parmi la direction et l'épaisseur est réglable par un utilisateur pendant que l'image spectrale est affichée.

7. Procédé selon l'une quelconque l'une quelconque des revendications 5 et 6, dans lequel la sélection de la bande (B) comprenant une sélection successive de deux pixels différents de l'image spectrale, la direction étant indiquée par une ligne passant par les deux pixels.

8. Procédé selon l'une quelconque des revendications précédentes, dans lequel, lorsque les actions d'utilisateur comprennent la sélection dans l'image spectrale d'un secteur angulaire (S) s'étendant depuis un pixel central (P0) de l'image spectrale associé à une fréquence spatiale nulle, modifier l'image spectrale comprend mettre à zéro la valeur de chaque pixel de l'image spectrale se trouvant dans le secteur angulaire (S).

9. Procédé selon l'une quelconque des revendications précédentes, dans lequel, lorsque les actions d'utilisateur comprennent la sélection dans l'image spectrale d'un anneau (D) s'étendant autour d'un pixel central (P0) de l'image spectrale associé à une fréquence spatiale nulle, l'anneau (D) étant défini par un rayon interne (R1) associé à une première fréquence spatiale et par un rayon externe (R2) associé à une deuxième fréquence spatiale supérieure à la première fréquence spatiale, modifier l'image spectrale comprend mettre à zéro la valeur de chaque pixel de l'image se trouvant hors de l'anneau, à l'exception du pixel central (P0).

10. Produit programme d'ordinateur comprenant des instructions de code de programme pour l'exécution des étapes du procédé selon l'une des revendications précédentes, lorsque ce programme est exécuté par un ordinateur.
